# EUROPEAN PATENT APPLICATION

(11) **EP 2 091 245 A2**
(43) Date of publication of application: **19.08.2009**
(21) Application number: 08161457.0
(22) Date of filing: 30.07.2008
(51) Int. Cl.: H04N 5/50

(54) **Digital television signal-receiving device with signal strength showing function**

(30) Priority: 15.02.2008 TW 97105369
(71) Applicant: Avermedia Technologies, Inc., Chung Ho City Taipei Hsien (TW)
(72) Inventor: Yeh, Chien-Ming, Chung Ho City (TW); Chiang, Chien-Chung, Chung Ho City (TW); Lee, Neng-Chia, Chung Ho City (TW); Liu, Hong-Wei, Chung Ho City (TW)
(74) Representative: Viering, Jentschura & Partner

(57) **Abstract**

A digital television signal-receiving device with signal strength showing function is disclosed. The digital television signal-receiving device includes a tuner, a microprocessor control unit, and a signal strength indicator. The signal of digital television is tuned with the tuner. The microprocessor control unit could read a signal decibel value of the signal of digital television and provide a strength signal corresponding to the signal decibel value. The signal strength indicator driven with the microprocessor control unit could receive the strength signal and show an indication of the signal strength.

## Description

### BACKGROUND

### Field of Invention

The present invention relates to a digital television signal-receiving device, and in particularly, relates to a digital television signal-receiving device for detecting and showing a signal strength.

### Description of Related Art

The rapid development of information technologies has diversified the applications of the computer products. At the same time, the varieties and the functions of the peripheral devices of the computers have also increased. Many consumers use a digital television signal-receiving device, such as additional television cards or television boxes, to watch television programs with computer monitors.

The wireless digital television signal is transmitted from the transmitter to the user end through the air. However, the signal quality might be unstable with different time and places. The user cannot determine which place is preferable to locate the digital television signal-receiving device, and this seriously bothers the users during the use and influences the receiving quality of the digital television signal-receiving device.

Therefore, how to ensure the quality of the incident television signals on the digital television signal-receiving device is an important issue in this field.

### SUMMARY

The objective of this invention is to provide a digital television signal-receiving device with a signal strength display function, which enables the user to be aware of the strength of the presently received television signal.

According to an embodiment of the present invention, a digital television signal-receiving device with a signal strength display function is disclosed. The digital television signal-receiving device includes a tuner, a microprocessor control unit, and a signal strength indicator. The signal of digital television is tuned with the tuner. The microprocessor control unit could read a signal decibel value of the signal of digital television and provide a strength signal corresponding to the signal decibel value. The signal strength indicator driven with the microprocessor control unit could receive the strength signal and show an indication of the signal strength.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
FIG. 1 illustrates a block diagram of a first embodiment of the digital television signal-receiving device with signal strength showing function of the present invention;
FIG. 2 illustrates an indication schematic diagram corresponding to the strength determination table of table 1;
FIG. 3 illustrates a schematic diagram of the first embodiment of the digital television signal-receiving device with signal strength showing function of the present invention;
FIG. 4 illustrates another schematic diagram of the first embodiment of the digital television signal-receiving device with signal strength showing function in accordance of the present invention;
FIG. 5 illustrates a block diagram of a second embodiment of the digital television signal-receiving device with signal strength showing function of the present invention;
FIG. 6 illustrates a block diagram of a third embodiment of the digital television signal-receiving device with signal strength showing function of the present invention;
FIG. 7 illustrates a schematic diagram of the third embodiment of the digital television signal-receiving device with signal strength showing function of the present invention; and
FIG. 8 illustrates a block diagram of a fourth embodiment of the digital television signal-receiving device with signal strength showing function of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

The digital television signal is invisible and therefore makes it difficult to know the preferable location for the digital television signal-receiving device. Accordingly, the present invention provides a digital television signal-receiving device with signal strength showing function to clearly show the strength of the receivable digital television signal to the user, which is similar to a mobile phone.

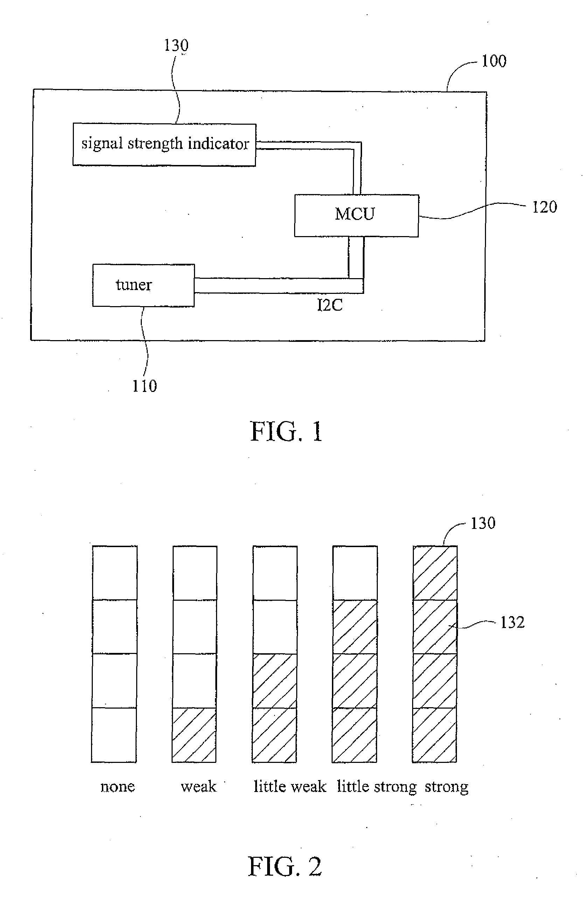

Refer to FIG. 1. Fig. 1 is a block diagram of a first embodiment of the digital television signal-receiving device with signal strength showing function of the present invention. The digital television signal-receiving device 100 includes a tuner 110, a microprocessor control unit 120, and a signal strength indicator 130. The digital television signal-receiving device 100 is configured to receive a digital television signal. The tuner 120 subsequently converts this received high frequency digital television signal into an intermediate frequency digital television signal. Then the microprocessor control unit 120 reads the signal decibel value of the tuned digital television signal through an I2C (inter-IC bus) to determine the signal decibel value and transmits a strength signal to the signal strength indicator 130 to show the strength of the received digital television signal. The microprocessor control unit 120 controls the signal strength indicator 130 to show an indication corresponding to the strength signal.

**<Table 1>**

| Signal decibel value (dBm) | Signal Strength Shown |
|---|---|
| >-33dBm | strong |
| -33dBm∼-48dBm | little strong |
| -48dBm∼-63dBm | little weak |
| -63dBm∼-78dBm | weak |
| <-78dBm | none |

Table 1 shows the relationship between the strength of the digital television signal received and the signal strength shown on the signal strength indicator 130. FIG. 2 illustrates an indication schematic diagram corresponding to the strength determination table of table 1. Consider with a television card with an 8 MHz bandwidth (BM), an 8K fast Fourier transformation (FFT), a 64QAM (quadrature amplitude modulation) adapted modulation scheme, a 7/8 carrier recovery (CR) and a guard interval (GI) 1/32 the length of the television card is 1/32. When the received television signal decibel value is greater than -33 dBm (decibels referred to one milliwatt), the received digital TV signal is considered strong and the strength signal shown on the signal strength indicator is strong. When the received television signal decibel value is between -33 dBm to -48 dBm, the strength signal determined by the MICROPROCESSOR CONTROL UNIT 120 is regarded as little strong. When the received television signal decibel value is between -48 dBm to -63 dBm, the strength signal determined of the received digital television signal by the MICROPROCESSOR CONTROL UNIT 120 is considered a little weak and shown on the signal strength indicator 130 as a little weak. When the received television signal decibel value determined by the MICROPROCESSOR CONTROL UNIT 120 is between -63 dBm to -78 dBm, the strength signal of the received digital television signal is considered as weak and shown on the signal strength indicator 130 as weak. When the received television signal decibel value read by the MICROPROCESSOR CONTROL UNIT 120 is less than -78 dBm (even less), the strength of the received digital television signal is considered to be non-existent and no signal is shown on the signal strength indicator 130.

Refer to FIG. 2. Fig. 2 illustrates an indication schematic diagram corresponding to the strength determination table of table 1. The signal strength indicator 130 shown in FIG. 1 may include a plurality of light emitting diodes (LEDs) 132. The indication of the strength of the received digital television signal is presented by the lit number of LEDs. The lit number of the LEDs 132 is according to the strengths as shown in table 1. For example, if the determined strength signal of the received digital television signal is strong, all of the LEDs 132 is lit to indicate the strength signal. The number of the lit LEDs 132 is decreasing when the strength of the received digital television signal goes weak. If there is no digital television signal received, none of the LEDs are lit. Then, the user may move the digital television signal-receiving device 100 to a different location for better signal receiving.

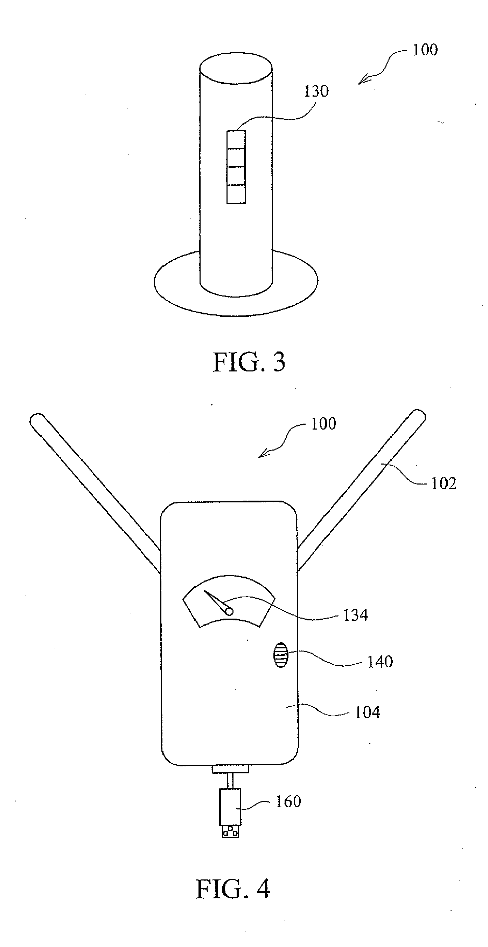

Refer to Fig. 3. FIG. 3 illustrates a schematic diagram of the first embodiment of the digital television signal-receiving device with signal strength showing function of the present invention. The signal strength indicator 130 may be disposed on the outer surface of the digital television signal-receiving device 100. The signal strength indicator 130 presents the strength of the received digital television signal according to the location of the digital television signal-receiving device 100, and enables the user to determine the preferable location for locating the digital television signal-receiving device 100.

The digital television signal-receiving device 100 of the present embodiment may be a receiving antenna, or a receiving antenna and television card combined module. As shown in FIG. 4, the digital television signal-receiving device 100 is a module including a receiving antenna 102, a television card 104, and a connecting interface 160 connecting to a computer. The digital television signal-receiving device 100 may be further disposed with a control switch 140 for switching on or off the signal strength indicator 130 on the outer surface. The signal strength indicator 130 of this embodiment may include an indicating pointer 134, and the strength of the received digital television signal would be presented by a deflection angle of the indicating pointer 134.

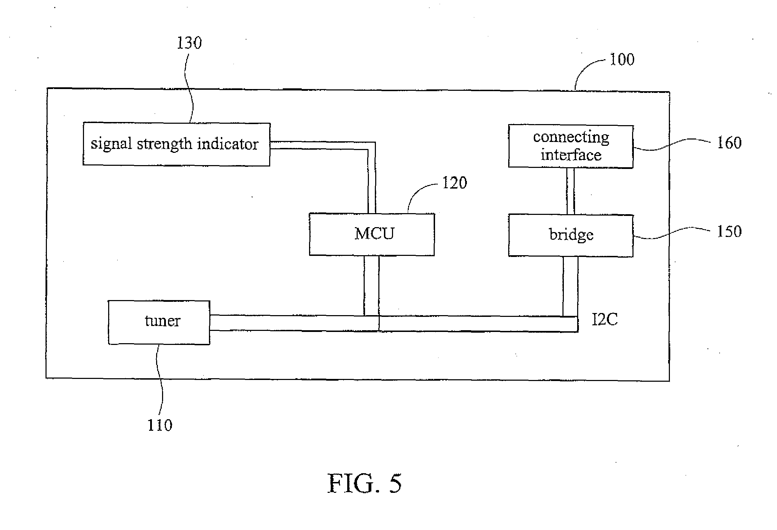

FIG. 5 illustrates a block diagram of a second embodiment of the digital television signal-receiving device with signal strength showing function of the present invention. The digital television signal-receiving device 100 further includes a bridge 150 and a connecting interface 160. The tuner 110 tunes the digital television signal and transmits the tuned digital television signal to the computer through the bridge 150 and the connecting interface 160. The strength of the digital television signal is displayed on the computer screen. The connecting interface 160 can be a Peripheral Component Interconnect bus (PCI bus) or a Universal Serial Bus (USB).

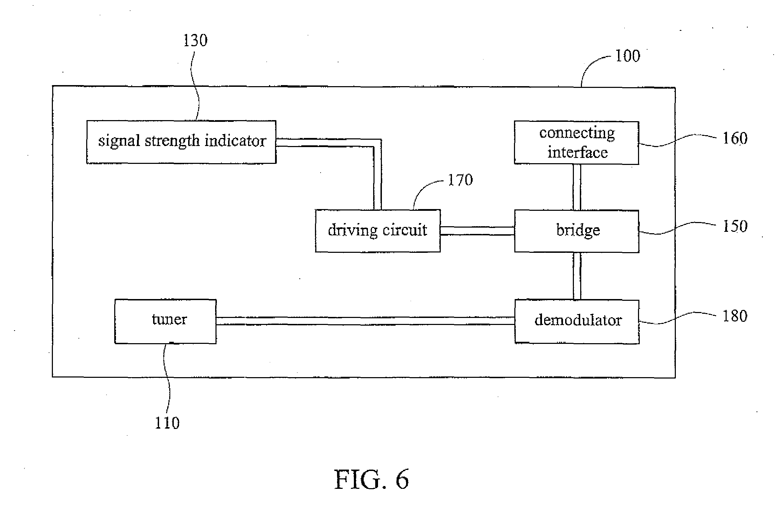

Referring to FIG. 6. FIG. 6 illustrates a block diagram of a third embodiment of the digital television signal-receiving device with signal strength showing function of the present invention. The digital television signal-receiving device 100 includes the tuner 110, the bridge 150, the signal strength indicator 130, and a driving circuit 170. The signal strength indicator 130 is controlled by the bridge 150 in this embodiment. The tuner 110 tunes the television signal, and then the bridge 150 reads the signal decibel value of the television signal through an I2C bus and determines the strength signal corresponding to television signal to be shown on the signal strength indicator 130. The strength signal is transmitted to the driving circuit 170 to drive the signal strength indicator 130 to show the corresponding indication.

The digital television signal-receiving device 100 of the present invention may be an antenna or a receiving antenna and television card combined module. The digital television signal-receiving device 100 further includes a demodulator 180 when the received television signal is an analog signal. The demodulator 180 is configured to demodulate the analog television signal into a digital television signal, which is then transmitted to the computer for displaying through the bridge 150 and the connecting interface 160. The tuner 180 is preferably disposed between the bridge 150 and the tuner 110. The bridge 150 may read the signal decibel value of the digital television signal tuneded by the tuner 180.

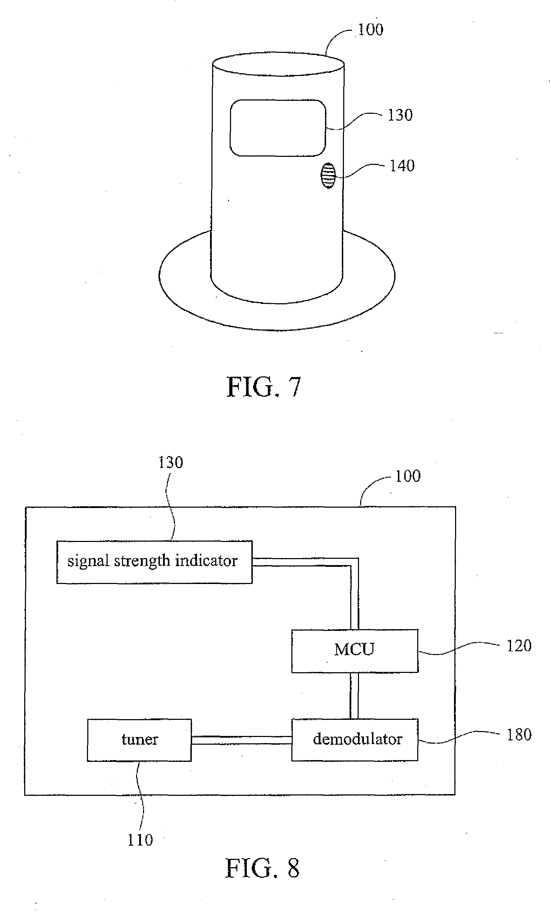

Refer to Fig. 7. FIG. 7 illustrates a schematic diagram of the third embodiment of the digital television signal-receiving device with signal strength showing function of the present invention. The digital television signal-receiving device 100 of the present invention can be the receiving antenna. The signal strength indicator 130 is disposed on the outer surface of the digital television signal-receiving device 100, and the signal strength indicator 130 may include a liquid crystal display panel, and the strength of the digital television signal may be presented by the number shown on the liquid crystal display panel. The larger the number, the stronger the received television signal is. Alternatively, the signal strength indicator 130 of the liquid display panel can be divided into several bars. The full signal strength bars stands for the strongest signal, and the empty signal strength bars stands for none signal. The digital television signal-receiving device 100 may include a control switch 140 for switching on or off the signal strength indicator 130.

Refer to Fig. 8. FIG. 8 illustrates a block diagram of a fourth embodiment of the digital television signal-receiving device with signal strength showing function of the present invention. The digital television signal-receiving device 100 may be adapted to receive the analog television signal. The digital television signal-receiving device 100 includes the tuner 110 for tuning high frequency analog television signals to intermediate frequency analog television signals, a demodulator 180 for demodulating the analog television signals into the digital television signal, and a microprocessor control unit 120 for reading the signal decibel value of the digital television signal. The microprocessor control unit 120 determines the strength of the signal decibel value and provides the strength signal to the signal strength indicator 130. Then the signal strength indicator 130 can show the indication corresponding to the showing strength.

In other embodiments, the indication of the signal strength indicator can be presented with the lit number of the LEDs, which are disposed on the outer surface of the digital television signal-receiving device. Alternately, the signal strength indicator can be shown on the display screen of the computer under the designed program. In the signal strength indicator, the indication for showing the strength is shown by the lit number of LEDs or number displayed on the liquid crystal display panel. Furthermore, the signal strength indicator may include the indicating pointer for pointing out the signal strength. The digital television signal-receiving device can be simply a receiving antenna or a receiving antenna and television card combined module. The digital television signal-receiving device can be coupled to the laptop computer or the desktop computer through the connecting interface. The digital television signal-receiving device may receive digital television signals, analog television signals, or the both. The digital television signal-receiving device may read the signal decibel value of the received television signal through the microprocessor control unit or the bridge. The signal strength indicator may be driven by the driving circuit or the microprocessor control unit.

According to the recited preferable embodiment, the digital television signal-receiving device of the present invention has the following advantage. The digital television signal-receiving device is capable of showing the television signal strength on the signal strength indicator, so that the user may realize the strength of the present received signal and determine to change the setting location of the digital television signal-receiving device or not.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A digital television signal-receiving device with a signal strength showing function, the digital television signal-receiving device comprising:
a tuner for tuning a received digital television signal;
a microprocessor control unit for reading a signal decibel value of the tuned digital television signal and providing a strength signal corresponding to the signal decibel value; and
a signal strength indicator, wherein the strength signal is transmitted to the signal strength indicator, and the microprocessor control unit drives the signal strength indicator to show an indication corresponding to the strength signal.

2. The digital television signal-receiving device with signal strength showing function of claim 1, wherein the signal strength indicator is disposed on an outer surface of the digital television signal-receiving device.

3. The digital television signal-receiving device with signal strength showing function of claim 2, wherein the signal strength indicator comprises a liquid crystal display panel, and the indication comprises a number displayed on the liquid crystal display panel.

4. The digital television signal-receiving device with signal strength showing function of claim 2, wherein the signal strength indicator comprises a plurality of light emitting diodes (LEDs), and the indication is presented by a lit number of the LEDs.

5. The digital television signal-receiving device with signal strength showing function of claim 2, wherein the signal strength indicator comprises an indicating pointer, and the indication is a deflection angle of the indicating pointer.

6. A digital television signal-receiving device with signal strength showing function, the digital television signal-receiving device comprising:
a tuner for tuning a digital television signal;
a bridge for reading a signal decibel value of the tuned digital television signal and providing a strength signal corresponding to the signal decibel value;
a driving circuit; and
a signal strength indicator, wherein the strength signal is transmitted to the signal strength indicator through the driving circuit, and the signal strength indicator is driven by the driving circuit to show an indication corresponding to the strength signal.

7. The digital television signal-receiving device with signal strength showing function of claim 6, wherein the signal strength indicator is disposed on an outer surface of the digital television signal-receiving device.

8. The digital television signal-receiving device with signal strength showing function of claim 7, wherein the signal strength indicator comprises a liquid crystal display panel, and the indication comprises a number displayed on the liquid crystal display panel.

9. The digital television signal-receiving device with signal strength showing function of claim 7, wherein the signal strength indicator comprises a plurality of light emitting diodes (LEDs), and the indication is presented by a lit number of the LEDs.

10. The digital television signal-receiving device with signal strength showing function of claim 6, wherein the digital television signal-receiving device comprises a connecting interface electrically connecting to the bridge, and the digital television signal-receiving device is coupled to a computer through the connecting interface, and the signal strength indicator is shown on a display screen of the computer.

11. A digital television signal-receiving device with signal strength showing function, comprising:
a tuner for tuning a received analog television signal;
a demodulator for demodulating the analog television signal into a digital television signal;
a microprocessor control unit for reading a signal decibel value of the digital television signal and providing a strength signal corresponding to the signal decibel value; and
a signal strength indicator, wherein the strength signal is transmitted to the signal strength indicator, and the microprocessor control unit drives the signal strength indicator to show an indication corresponding to the strength signal.

12. The digital television signal-receiving device with signal strength showing function of claim 11, wherein the signal strength indicator is disposed on an outer surface of the digital television signal-receiving device.

13. The digital television signal-receiving device with signal strength showing function of claim 12, wherein the signal strength indicator comprises a liquid crystal display panel, and the indication comprises a number displayed on the liquid crystal display panel.

14. The digital television signal-receiving device with signal strength showing function of claim 12, wherein the signal strength indicator comprises a plurality of light emitting diodes (LEDs), and the indication is presented by a lit number of the LEDs.

15. The digital television signal-receiving device with signal strength showing function of claim 11, wherein the digital television signal-receiving device comprises a connecting interface electrically connecting to the bridge, and the digital television signal-receiving device is coupled to a computer through the connecting interface, and the signal strength indicator is shown on a display screen of the computer.
